# EUROPÄISCHE PATENTSCHRIFT

(11) **EP 3 216 334 B1**
(45) Veröffentlichungstag und Bekanntmachung des Hinweises auf die Patenterteilung: **23.10.2024**
(21) Anmeldenummer: 17401019.9
(22) Anmeldetag: 02.03.2017
(51) Int. Cl.: A01C 17/00

(54) **SYSTEM UND EIN VERFAHREN ZUR ERFASSUNG WENIGSTENS EINES STREUPARAMETERS EINES STREUFÄHIGEN GUTES IM FELD**
SYSTEM AND A METHOD FOR DETECTING AT LEAST ONE DISPERSION PARAMETER OF A DISPERSIBLE GOOD IN THE FIELD
SYSTÈME ET PROCÉDÉ DE DÉTECTION D'AU MOINS UN PARAMÈTRE D'ÉPANDAGE D'UN PRODUIT À ÉPANDRE DANS UN CHAMP

(30) Priorität: 08.03.2016 DE 102016104143
(43) Veröffentlichungstag der Anmeldung: 13.09.2017
(60) Teilanmeldung: 18161369.6
(73) Patentinhaber: Amazonen-Werke H. Dreyer SE & Co. KG, 49205 Hasbergen (DE)
(72) Erfinder: Wild, Karl, 01454 Ullersdorf (DE)

(56) Entgegenhaltungen:
- DE-A1- 102014 103 964
- DE-A1- 19 636 636
- DE-B3- 102013 019 098

## Beschreibung

Die Erfindung betrifft ein System und ein Verfahren zur Erfassung wenigstens eines Streuparameters eines streufähigen Gutes im Feld.

Ein derartiges System und ein derartiges Verfahren sind in DE102014103964A1 beschrieben. Zu verteilendes Gut, wie beispielsweise Mineraldünger, wird in vorgebbaren Verteilungen auf landwirtschaftlichen Nutzflächen ausgebracht. Das Flugverhalten der einzelnen Streugutpartikel hängt von Einflussgrößen wie beispielsweise Partikelform, Partikelgröße und/oder Schüttdichte ab, welche sich während des Verteilvorgangs ändern. Daher ist es notwendig, die Streuparameter, wie die Ist-Verteilung, insbesondere die Längs- und/oder Querverteilung, und die Wurfweite(n) und/oder -richtung(en) während des Verteilvorgangs zu untersuchen und mit den gewünschten Soll-Werten abzugleichen. Zu diesem Zweck werden vom Führer der Arbeitsmaschine quer zur Fahrtrichtung der landwirtschaftlichen Arbeitsmaschine Haft-/Prüfmatten ausgelegt, die geeignet sind, die verteilten Streugutpartikel im Wesentlichen am Ort ihres Auftreffens aufzufangen und festzuhalten. Dazu weisen diese Haft-/Prüfmatten eine Vielzahl regelmäßig verteilter Auffangräume auf. Die Ist-Verteilung der ausgebrachten Streugutpartikel auf den ausgelegten Haft-/Prüfmatten wird ohne notwendigen Transfer der Streugutpartikel zu einer separaten Messvorrichtung mit bildgebenden Mitteln bestimmt. Dazu wird die aufgefangene Ist-Verteilung in wenigstens einem digitalen Kamerabild festgehalten, auf welchem mit bildanalytischen Mitteln bei konstantem Kontrast zwischen Mattenhintergrund und Streugutpartikel die Positionen der einzelnen Partikel bestimmt werden. Dieser Schritt wird in einem programmierbaren, lichtbildfähigen Mobilgerät, beispielsweise Mobiltelefon, einem sogenannten Smartphone, durchgeführt. Im Anschluss werden von dem Mobilgerät oder nach Weitergabe der ermittelten Daten beispielsweise an die Recheneinheit der landwirtschaftlichen Arbeitsmaschine von dieser Recheneinheit durch Abgleich mit der eingestellten Soll-Verteilung erforderlichenfalls notwendige Korrekturmaßnahmen für die Betriebsparameter der Arbeitsmaschine abgeleitet. Dadurch werden Abweichungen zwischen Ist- und Soll-Verteilung erheblich minimiert. Durch das manuelle Auslegen der Haft-/Prüfmatten, das Bestreuen des entsprechenden Teilstücks der landwirtschaftlichen Nutzfläche sowie das anschließende Fotografieren der Matten und Auswerten der Daten durch den Maschinenführer muss der Arbeitsvorgang mehrfach unterbrochen werden. Der gesamte Vorgang benötigt zudem viel Zeit und muss bei einer Änderung der Einflussgrößen wiederholt werden.

In der DE 196 36 636 A1 wird die Erfassung des fleigenden Streuguts, also die Erfassung des konkreten Streubildes, mittels kontaktfreier Methoden vorgeschlagen, um insbesondere bei der Ausbringung an Hanglagen eine verbesserte Streugutverteilung zu erreichen.

Der Erfindung liegt daher die Aufgabe zugrunde, ein System und Verfahren zu schaffen, welches die Erfassung wenigstens eines Streuparameters von Streugutpartikeln in zeitökonomischer Weise ermöglicht.

Diese Aufgabe wird erfindungsgemäß durch ein Verfahren nach Anspruch 1 und ein System nach Anspruch 6 gelöst.

Die Positionsbestimmung erfolgt beispielsweise über ein satellitengestütztes Ortungssystem, ein Koppelortungssystem, anhand bildanalytischer Methoden relativ zur Umgebung oder mittels externer Ortungssysteme.

Durch DE102013019098B3 sind unbemannte Luftfahrzeuge (ULF) bekannt. Derartige unbemannte Luftfahrzeuge sind vorzugsweise senkrecht start- und landefähig, sodass ihre Start- und Landevorrichtung auch an einem Bodenfahrzeug angeordnet werden kann. Dieses Bodenfahrzeug kann beispielsweise eine landwirtschaftliche Arbeitskombination, insbesondere bestehend aus Zugmaschine und Arbeitsmaschine, sein. Die unbemannten Luftfahrzeuge weisen eine nachfüllbare oder austauschbare Energiespeichereinheit und eine Funktionsein heit zur Erfassung von Parametern der Umwelt und Umgebung auf. Diese erfassten Parameter von Umwelt und Umgebung sind drahtlos an eine Steuerungseinrichtung der Start- bzw. Landevorrichtung und/oder des Bodenfahrzeugs übertragbar. Mithilfe einer Steuereinheit der Start- bzw. Landevorrichtung bzw. des Bodenfahrzeugs ist die autonome Bewegung des unbemannten Luftfahrzeugs steuerbar.

Die Steuerung des unbemannten Luftfahrzeugs kann autonom erfolgen und/oder alternativ durch einen Bediener, welcher ein externer Bediener sein kann oder der Führer der landwirtschaftlichen Arbeitsmaschine. Die Steuerung durch einen Bediener erfolgt ferngesteuert mittels einer mobilen Steuereinrichtung oder ausgehend von einer Steuerzentrale. Diese Steuereinrichtung oder -zentrale kann auf der landwirtschaftlichen Arbeitsmaschine, vorzugsweise in der Kabine der Zugmaschine angeordnet sein.

Vorteilhaft ist die Verwendung von senkrecht start- und landefähigen unbemannten Luftfahrzeugen, da sie keine Start- und Landebahnen oder Abschussvorrichtungen benötigen und somit nur geringe Anforderungen an eine Start- und Landevorrichtung stellen. Durch den Verzicht auf Tragflächen sind sie kompakt gebaut, sodass eine Start- und Landeplattform mobil am Feldrand aufgebaut oder auf der landwirtschaftlichen Arbeitsmaschine oder deren Zugmaschine angeordnet sein kann.

Die Verwendung von Multicoptern erlaubt das Fliegen bei niedrigen Geschwindigkeiten, die auf die Arbeitsgeschwindigkeit der Arbeitsmaschine abgestimmt werden können. Die Bewegung des unbemannten Luftfahrzeugs kann entweder autonom, computergesteuert oder ferngesteuert durch den Fahrzeugführer der Zugmaschine oder einen weiteren Bediener erfolgen. Dabei wird ein autonomes Agieren bevorzugt, weil es den notwendigen Arbeitsaufwand reduziert.

Der Einsatz unbemannter Luftfahrzeuge für verschiedene landwirtschaftliche Zwecke ist bekannt. Beispielsweise werden sie zur topographischen Aufklärung oder spektroskopischen Untersuchung von beispielsweise Pflanzenbeständen genutzt. Ihr Einsatz in erfindungsgemäßer Weise bringt bei der Erfassung der Streugutverteilung erhebliche Vorteile. Der Maschinenführer, der die Verteilqualität seiner Arbeitsmaschine überprüfen muss, spart signifikant Zeit bei der Durchführung des Verfahrens, weil wesentliche Schritte durch das unbemannte Luftfahrzeug übernommen werden. So können beispielsweise nach einem nicht zur Erfindung gehörenden Verfahren Prüfschalen zum Auffangen von Streugut vom unbemannten Luftfahrzeug selbst oder durch den Maschinenführer an zuvor durch das System festgelegten und durch das unbemannte Luftfahrzeug markierten Positionen ausgelegt werden. Dies erfolgt in präziserer Art und Weise, als es dem Maschinenführer allein durch Abschreiten oder Messen geeigneter Entfernungen möglich wäre. Dadurch werden die Qualität des Auswerteverfahrens sowie die Wirtschaftlichkeit des Arbeitsprozesses signifikant erhöht. Vor allem ein autonomes Agieren des unbemannten Luftfahrzeugs beispielsweise in Kombination mit einer kontaktfreien Erfassung des wenigstens einen Streuparameters mittels geeigneter Sensorik bildet die Grundlage für eine Echtzeit-Durchführung des Verfahrens während des laufenden Arbeitsprozesses. Wiederum wird dadurch die Wirtschaftlichkeit des Arbeitsprozesses erhöht, da beispielsweise jederzeit zum Erreichen einer gleichmäßigen Streugutverteilung regelnd in den Verteilprozess eingegriffen werden kann. Somit wird ein kosteneffizienter Streuguteinsatz und, insbesondere bei Düngemittel, ein gleichmäßig hoher Ertrag erreicht.

Es ist erfindungsgemäß, wenn der wenigstens eine ermittelte Streuparameter der Streupartikel eines streufähigen Gutes die Wurfweite(n) und/oder die Verteilung der ausgebrachten körnigen Streugutpartikel von streufähigem Gut sind. Durch die Kenntnis der Streuverteilung, insbesondere der Längs- und/oder Querverteilung, kann eine gewünschte, gleichmäßige Düngung des Pflanzenbestandes gewährleistet werden. Die Kenntnis und gegebenenfalls die Steuerung der Wurfweite(n) und/oder -richtung(en) verhindert beispielsweise das Auftreffen von Streugutpartikeln auf benachbarten Flächen oder Gewässern.

Legt beispielsweise der Maschinenführer nach einem nicht zur Erfindung gehörenden Verfahren an festgelegten Positionen Prüfmatten oder Prüfschalen aus, über welchen anschließend die Streugutpartikel des streufähigen Guts ausgebracht und zumindest teilweise aufgefangen und/oder festgehalten werden, ist vorgesehen, dass zumindest ein unbemanntes Luftfahrzeug (ULF) die Bestimmung der Positionen zum Auslegen von Prüfmatten oder -schalen übernimmt und die bestimmten Positionen für den Maschinenführer mit geeigneten Mitteln markiert. Hierzu steuert das unbemannte Luftfahrzeug die vorbestimmten Positionen an und markiert sie in geeigneter Weise. Die Markierung kann beispielsweise mittels Farbmittel, Schaum oder Wasser erfolgen. Dadurch sind dem System die Positionen der Prüfmatten bekannt und für den Maschinenführer erkennbar. Die Positionen werden in geeigneter Weise in einer Speichervorrichtung des Systems abgelegt. Diese Positionen der Prüfmatten gehen in den Algorithmus zur Ermittlung der Streuverteilung ein und müssten ohne Unterstützung durch das unbemannte Luftfahrzeug durch den Maschinenführer manuell beispielsweise mittels Messvorrichtung ermittelt werden. Die Festlegung der Mattenpositionen durch das unbemannte Luftfahrzeug bringt dem Maschinenführer eine erhebliche Zeitersparnis. Dieses nicht zur Erfindung gehörende

Verfahren wird in vorteilhafter Weise durchgeführt, wenn das unbemannte Luftfahrzeug von den ausgelegten Prüfmatten oder -schalen, nachdem über diesen die Streugutpartikel des streufähigen Guts ausgebracht worden sind, mittels einer Einrichtung zur digitalen Bildaufnahme ein der jeweiligen Matten- oder Schalenposition zugeordnetes Bild der Matte oder Schale mit den aufgefangenen und/oder festgehaltenen Streugutpartikeln aufnimmt. Das unbemannte Luftfahrzeug steuert die ausgelegten, bestreuten Prüfmatten an, deren Positionen ihm bekannt sind. Über ein bildgebendes Sensorsystem nimmt das Auswertesystem digitale Bilder von den Prüfmatten mitsamt der aufgefangenen Streugutpartikel auf, welche der jeweiligen Position zugeordnet sind.

Eine vorteilhafte Durchführung des nicht zur Erfindung gehörenden Verfahrens wird dadurch erreicht, dass aus dem aufgenommenem Digitalbild mittels geeigneter Bildanalyse die Lage der Gutpartikel auf/in jeder Matte/Schale bestimmt wird, dass aus der Lage die Ist-Verteilung der Gutpartikel errechnet wird, dass diese Ist-Verteilung mit einer hinterlegten Soll-Verteilung abgeglichen wird und dass aus den bei diesem Abgleich festgestellten Differenzen Anpassungen der Betriebsparameter der Arbeitsmaschine abgeleitet werden.

Die Bildanalyse kann beispielsweise in einer Recheneinheit des unbemannten Luftfahrzeugs erfolgen oder nach Übermittlung der digitalen Bilddaten an eine Recheneinheit beispielsweise der landwirtschaftlichen Arbeitsmaschine in dieser Recheneinheit der landwirtschaftlichen Arbeitsmaschine. Die abgeleiteten Anpassungen der Betriebsparameter werden anschließend an die Steuereinheiten der Arbeitsmaschine weitergeleitet, die dann regelnd in den Verteilvorgang eingreifen und das Streubild in geeigneter Weise verändern, um die Ist-Verteilung an die eingestellte Soll-Verteilung anzupassen.

Eine wesentliche Vereinfachung des oben erwähnten, nicht zur Erfindung gehörenden Verfahrens wird dadurch erreicht, dass die Prüfmatten oder -schalen von einem unbemannten Luftfahrzeug selbst ausgelegt und/oder eingesammelt werden. Dabei werden die Positionen, an denen die Prüfmatten ausgelegt werden in einer Speichervorrichtung des Systems in geeigneter Weise abgelegt und sind dem Auswertesystem somit bekannt. Bei Bedarf werden die an den bekannten Positionen ausgelegten Prüfmatten durch das unbemannte Luftfahrzeug eingesammelt. Beim autonomen oder ferngesteuerten Auslegen und/oder Einsammeln der Prüfmatten durch das unbemannte Luftfahrzeug, wird eine erhebliche Zeitersparnis erreicht, da der Maschinenführer seinen Führerstand nicht verlassen muss und somit den Arbeitsvorgang weniger lange zur Durchführung des erfindungsgemäßen Verfahrend unterbrechen muss. Bestehen die ausgelegten Prüfmatten oder -schalen aus biologisch abbaubaren Material, ist dies eine weitere vorteilhafte Ausführung des nicht erfindungsgemäßen Verfahrens. Die ausgelegten und bestreuten Prüfmatten müssen nach Abschluss des Verfahrens und/oder des Arbeitsvorgangs nicht eingesammelt werden und können auf der Nutzfläche verbleiben. Dadurch wird die Zeit eingespart, die zum Einsammeln der Prüfmatten aufgebracht werden müsste.

Eine weitere vorteilhafte Ausführung des nicht erfindungsgemäßen Verfahrens wird erreicht, indem anstelle der Prüfmatten oder -schalen geeigneter Schaum und/oder Farbmittel verwendet wird. Schaum und/oder Farbmittel sind vorzugsweise umweltverträglich und/oder biologisch abbaubar ausgeführt, sodass sie auf der Nutzfläche verbleiben können. Vorteil bei der Verwendung von Schaum und/oder Farbmittel ist deren geringes Eigengewichtung und Volumen. Dadurch können sie in einfacher Weise von einem unbemannten Luftfahrzeug mitgeführt und ausgebracht werden. Des Weiteren kann somit auf die Nutzung spezieller, genormter Prüfmatten oder -schalen beispielsweise in rechteckiger Form verzichtet werden.

Die ausgebrachten Streugutpartikel treffen auf das ausgebrachte Farbmittel auf und ihre Positionen sind mit bildanalytischen Mitteln aus den aufgenommenen Digitalfotos aufgrund ihres Kontrastes ermittelbar. Treffen die Streugutpartikel auf ausgebrachten, beispielsweise gefärbten Schaum, sind auf den Digitalfotos die Einschlagstellen sichtbar und deren Positionen wiederum mit bildanalytischen Mitteln ermittelbar. Die ermittelten Positionen werden jeweils in den Auswertungsprozess des erfindungsgemäßen Verfahrens weitergeleitet.

Müssen die ausgebrachten Farbmittel oder der ausgebrachte Schaum keine festgelegte Form aufweisen, kann die Zeit eingespart werden, die zur Ausbringung des Farbmittels oder des Schaumes in einer festgelegten Form aufgebracht werden müsste. Von Vorteil ist es daher, wenn die Form und/oder Größe der Prüfmatten oder -schalen oder des Schaumes und/oder des Farbmittels mittels bildanalytischer Mittel aus den aufgenommenen Bildern bestimmt wird.

Aus der Verteilung des Streugutes kann/können auch die Wurfweite(en) der Streugutpartikel abgeleitet werden und/oder die Breite des Streufächers. Eine weitere Einsatzmöglichkeit für das nicht erfindungsgemäße Verfahren ist beispielsweise die Kontrolle eines exakten Grenzstreuens. Dazu werden die Prüfmatten oder - schalen oder der Schaum und/oder das Farbmittel an den Feldgrenzen ausgebracht. Anschließend wird mithilfe des erfindungsgemäßen Verfahrens überprüft, ob Streugut durch die Prüfmatten oder -schalen aufgefangen worden ist, woraufhin die Betriebsparameter der Arbeitsmaschine in geeigneter Weise nachgeregelt werden.

Nach dem erfindungsgemäßen Verfahren wird auf das Auslegen von Prüfmatten oder -schalen und das Festlegen von dafür geeigneten Positionen verzichtet und somit kann erheblich Zeit eingespart werden.

Dies wird erreicht, indem das unbemannte Luftfahrzeug den Teilchenstrom des streufähigen Gutes während des Verteilvorgangs mittels Sensoren erfasst.

Der Vorteil einer direkten Erfassung der Streugutpartikel durch ein unbemanntes Luftfahrzeug, welches mit geeigneten Sensoren ausgestattet ist, liegt darin, dass das erfindungsgemäße Verfahren kontinuierlich während des Arbeitsvorganges der landwirtschaftlichen Arbeitsmaschine durchgeführt werden kann und somit auch die Grundvoraussetzung für eine Echtzeit-Anwendung geschaffen wird. Geeignete Sensoren sind vorzugsweise kontaktfrei als Radar- oder Laserscanner oder mechanisch beispielsweise als Prallplatte mit zugeordnetem Piezzoelement als Messaufnehmer ausgeführt.

Die Erfassung der Ist-Verteilung wird dadurch erreicht, dass die Ausbreitungsrichtung(en) und -geschwindigkeit(en) der Teilchen des streufähigen Gutes durch die Erfassungseinrichtungen des unbemannten Luftfahrzeugs bestimmt und daraus die Flugweite der Teilchen ermittelt werden. Durch die Erfassung lediglich der Messwerte für Ausbreitungsrichtung(en) und -geschwindigkeit(en) und durch die anschließende Ermittlung der Flugweite der Partikel kann über rechnerische und/oder statistische Verfahren das gesamte Streubild rekonstruiert werden.

Das unbemannte Luftfahrzeug bewegt sich zur Erfassung der Ausbreitungsrichtung(en) und -geschwindigkeit(en) der Streugutpartikel mittels Sensoren vorzugsweise im Bereich der Streufächerausdehnung. Dadurch befindet es sich in der Nähe des Partikelstroms, sodass bei endlichem Auflösungsvermögen der Sensoren eine sichere Erfassung der Ausbreitungsrichtung(en) und -geschwindigkeit(en) der Streugutpartikel sichergestellt ist.

Die aus den Messwerten für die Ausbreitungsrichtung(en) und - geschwindigkeit(en) ermittelten Wurfweiten(en) der Teilchen werden mit Sollwerten abgeglichen und aus den bei diesem Abgleich festgestellten Differenzen werden Anpassungen der Betriebsparameter der Arbeitsmaschine abgeleitet. Die Sollwerte sind dazu in einer Speichereinheit beispielsweise der landwirtschaftlichen Arbeitsmaschine hinterlegt. Die abgeleiteten Anpassungen der Betriebsparameter der Arbeitsmaschine werden an Steuereinheiten der Arbeitsmaschine weitergeleitet. Diese Steuereinheiten greifen dann regelnd in den Verteilvorgang ein, um die Ist-Verteilung an die eingestellte Soll-Verteilung anzupassen.

Um die Ist-Verteilung der Streugutpartikel aus der direkten Erfassung der Ausbreitungsrichtung(en) und -geschwindigkeit(en) der Streugutpartikel zu ermitteln, ist es vorteilhaft, dass die Erfassungseinrichtungen des unbemannten Luftfahrzeugs zumindest den überwiegenden Teil des Streufächers der Arbeitsmaschine von einer Position oberhalb des Streufächers aus erfassen. Dadurch ist zu jedem Erfassungszeitpunkt eine breite Datenbasis gegeben, die die Qualität der ermittelten Ist-Verteilung erhöht.

Bei einem endlichen Auflösungsvermögen der verwendeten Erfassungseinrichtung und einer sehr großen Arbeitsbreite der Arbeitsmaschine kann das unbemannte Luftfahrzeug nicht den überwiegenden Teil des Streufächers erfassen, sodass es vorteilhaft ist, dass das unbemannte Luftfahrzeug den Streufächer abfliegt und abschnittsweise mittels Erfassungseinrichtungen erfasst. Durch das abschnittsweise Erfassen des Streufächers können Ausbreitungsrichtung(en) und - geschwindigkeit(en) der Streugutpartikel mit hoher Sicherheit ermittelt werden.

Mithilfe des erfindungsgemäßen Verfahrens kann ein exaktes Grenzstreuverhalten kontrolliert werden. Dazu ist es vorteilhaft, wenn das unbemannte Luftfahrzeug im Bereich der Feldgrenze, oberhalb dieser, vorzugsweise senkrecht über dieser fliegt und dort mittels Sensoren erfasst, ob der Teilchenstrom die Feldgrenze überschreitet. Ist dies der Fall, wird durch das erfindungsgemäße Verfahren die Wurfweite(en) und/oder -richtung(en) der Streugutpartikel in geeigneter Weise reguliert werden.

Es ist vorteilhaft, das vorgeschlagene Verfahren mit einem System durchzuführen, das ein unbemanntes Luftfahrzeug aufweist und dass das unbemannte Luftfahrzeug auf der landwirtschaftlichen Arbeitsmaschine start- und landefähig ist. Dadurch werden keine besonderen Anforderungen an eine Start- und Landevorrichtung gestellt, da keine Landebahn einer bestimmten Länge benötigt wird.

Damit ein ferngesteuerter oder autonomer und vor allem ein vorzugsweise über den gesamten Verteilvorgang andauernder Einsatz des unbemannten Luftfahrzeugs möglich ist, wird bevorzugt, dass das unbemannte Luftfahrzeug eine wieder auffüllbare und/oder austauschbare Energiespeichereinheit aufweist. Somit ist nach nur kurzen zum Auffüllen und/oder Austauschen der Energiespeichereinheit notwendigen Einsatzunterbrechungen das unbemannte Luftfahrzeug erneut betriebsbereit.

Zur Aufnahme von digitalen Fotografien der Prüfmatten oder -schalen nach einem nicht zur Erfindung gehörenden Verfahren ist es notwendig, dass das unbemanntes Luftfahrzeug mit einer Einrichtung zur digitalen Bildaufnahme und mit einer Einheit zur Analyse der digital aufgenommenen Bildet und/oder mit einer Einheit zum Senden der digital aufgenommenen Bilder an eine mit einer Einheit zur Bildanalyse ausgestattete Basisstation und/oder landwirtschaftliche Arbeitsmaschine ausgestattet ist.

Sollen darüber hinaus die Prüfmatten oder -schalen ferngesteuert oder autonom von dem unbemannten Luftfahrzeug ausgelegt und/oder eingesammelt werden, ist es von Vorteil, dass das unbemannte Luftfahrzeug mit einer Einrichtung zum Transportieren und Verteilen und/oder Einsammeln von Prüfmatten oder -schalen oder Schaum und/oder Farbmittel ausgestattet ist. Dadurch spart der Maschinenführer die Zeit ein, die er für die manuelle Ausführung dieses Verfahrensschrittes benötigte.

Ausbreitungsrichtung(en) und -geschwindigkeit(en) der ausgebrachten Streugutpartikel werden von einem unbemannten Luftfahrzeug beispielsweise mittels Sensorik gemessen. Eine kostengünstige Lösung ergibt sich dadurch, dass dei Sensor ein mechanischer Sensor, beispielsweise Prallplatte oder Membran ist, mit einem Messaufnehmer, beispielsweise Piezzoelement, und dieser Sensor vom Teilchenstrom beschossen wird.

Um das unbemannte Luftfahrzeug nicht zu nahe am oder im Teilchenstrom einzusetzen, wird bevorzugter Weise die Lösung vorgeschlagen, dass das unbemannte Luftfahrzeug Sensoren zur kontaktfreien Erfassung des Teilchenstroms aufweist, vorzugsweise Radarscanner, Laserscanner oder eine Kamera zur Aufnahme digitaler Bilder vorzugsweise mitsamt einer Einheit zur Bildauswertung. Dadurch wird die Flugstabilität des unbemannten Luftfahrzeugs nicht durch Teilchenbeschuss gefährdet.

Eine vorteilhafte Ausgestaltung des Systems zu Durchführung des erfindungsgemäßen Verfahrens ist dadurch gegeben, dass das unbemannte Luftfahrzeug mit geeigneter, insbesondere kontaktfreier, Sensorik zur dreidimensionalen Erfassung des Streufächers 9, beispielsweise einer 3D-Kamera, ausgestattet ist. Aus einer dreidimensionalen Erfassung des Streufächers lassen sich zusätzliche Informationen aus den ermittelten Werten ableiten.

Eine weitere vorteilhafte Ausgestaltung des Systems sieht vor, dass zumindest zwei unbemannte Luftfahrzeuge mit geeigneter Sensorik zur Erfassung der Struktur des Streufächers eingesetzt werden, um die Streuverteilung dreidimensional zu erfassen. Der Einsatz mehrerer unbemannter Luftfahrzeuge ermöglicht das Aufteilen des Arbeitsaufwandes und bewirkt eine erhebliche Zeitersparnis. Zusätzlich wird die Genauigkeit der Erfassung erheblich verbessert, da beispielsweise unter schwierigen Bedingungen auch eine gleichzeitige Erfassung mehrerer Abschnitte des Streufächers möglich ist.

Weitere Einzelheiten der Erfindung sind der Beispielsbeschreibung und den Zeichnungen zu entnehmen. Die Zeichnungen zeigen
- Fig.1: eine landwirtschaftliche Arbeitsmaschine, welche Streugutpartikel über einer Nutzfläche ausbringt, wobei ein begleitendes unbemanntes Luftfahrzeug nach einem nicht zur Erfindung gehörenden Verfahren an der Feldgrenze zur Kontrolle des Grenzstreuens ausgelegte Prüf-/Haftmatten ablichtet in einer Ansicht von oben,
- Fig.2: die landwirtschaftliche Arbeitsmaschine, welche in Begleitung eines unbemannten Luftfahrzeugs nach einem nicht zur Erfindung gehörenden Verfahren Streugutpartikel über Haft-/Prüfmatten ausbringt wie in Fig. 1, jedoch in perspektivischer Ansicht von schräg vorne,
- Fig.3: die landwirtschaftliche Arbeitsmaschine, welche in Begleitung eines unbemannten Luftfahrzeugs nach einem nicht zur Erfindung gehörenden Verfahren Streugutpartikel über Haft-/Prüfmatten ausbringt nach den Fig. 1 und 2, in perspektivischer Ansicht von schräg hinten,
- Fig.4: die landwirtschaftliche Arbeitsmaschine, welche Streugutpartikel nach einem nicht zur Erfindung gehörenden Verfahren über Haft/Prüfmatten ausbringt, wobei diese Haft-/Prüfmatten von einem begleitenden unbemannten Luftfahrzeug fotografisch abgebildet werden nach den vorhergehenden Fig. 1 bis 3, jedoch in einer Ansicht von hinten,
- Fig.5: die landwirtschaftliche Arbeitsmaschine, welche in Begleitung eines unbemannten Luftfahrzeugs nach einem nicht zur Erfindung gehörenden Verfahren Streugutpartikel über Haft-/Prüfmatten ausbringt nach den vorhergehenden Fig. 1 bis 4, jedoch in einer Ansicht von oben,
- Fig.6: eine landwirtschaftliche Arbeitsmaschine, welche Streugutpartikel über einer Nutzfläche ausbringt, wobei ein begleitendes unbemanntes Luftfahrzeug Ausbreitungsrichtung(en) und -geschwindigkeit(en) der Partikel kontaktfrei erfasst in einer Ansicht von oben,
- Fig.7: eine landwirtschaftliche Arbeitsmaschine, welche Streugutpartikel über einer Nutzfläche ausbringt, wobei ein begleitendes unbemanntes Luftfahrzeug Ausbreitungsrichtung(en) und -geschwindigkeit(en) der Partikel kontaktfrei erfasst in einer Ansicht von vorne und
- Fig.8: eine landwirtschaftliche Arbeitsmaschine, welche Streugutpartikel über einer Nutzfläche ausbringt, wobei ein begleitendes unbemanntes Luftfahrzeug Ausbreitungsrichtung(en) und -geschwindigkeit(en) der Partikel mechanisch erfasst in einer Ansicht von vorne.

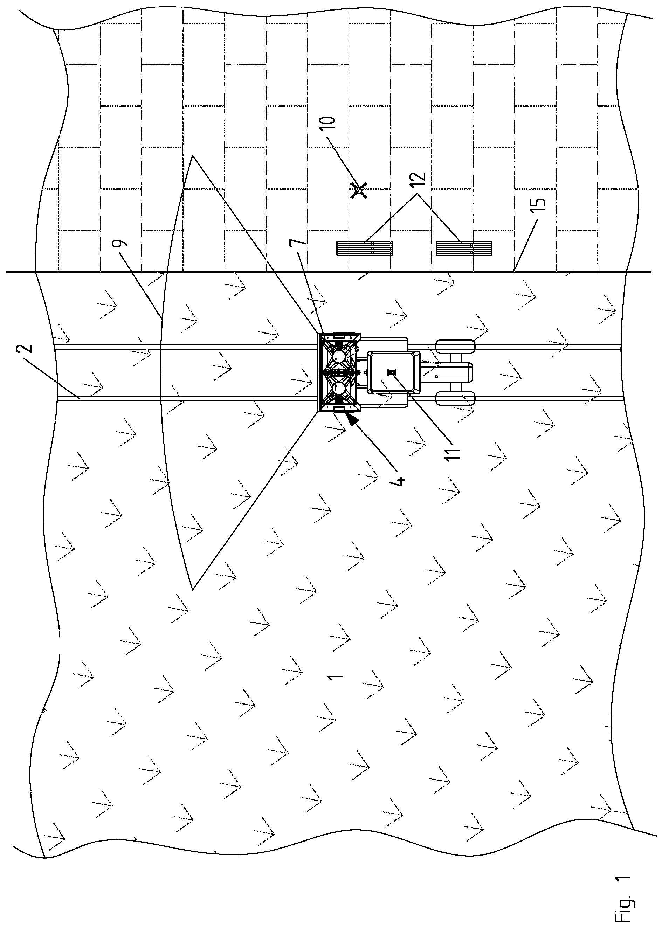

Auf einer in Fig. 1 nur teilweise dargestellten landwirtschaftlichen Nutzfläche 1 sind beispielsweise von einem elektronisch basierten Managementsystem in bekannter und daher nicht näher erläuterter Weise Fahrspuren 2 für weitere Bearbeitungsschritte der Nutzfläche 1 angelegt worden. In diesen Fahrspuren 2 bewegt sich eine landwirtschaftliche Arbeitskombination, bestehend aus einer Zugmaschine 3 und einer Arbeitsmaschine 4. Die Arbeitsmaschine 4 ist in dem gewählten Beispiel als angebauter Zentrifugaldüngerstreuer ausgebildet, wie in den Fig. 1 bis 8 gezeigt ist.

Die Arbeitsmaschine 4 ist mittels an ihrem Rahmen 5 angeordneten Kupplungselementen an einem Dreipunktkraftheber der Zugmaschine 3 angebaut. Die Arbeitsmaschine 4 weist zur Bevorratung der zu verteilenden Streugutpartikel 6, wie Dünger, einen Vorratsbehälter 7 auf, der sich auf den Rahmen 5 abstützt. Die zu verteilenden Streugutpartikel 6 werden beim Verteilvorgang über der zu bearbeitenden landwirtschaftlichen Nutzfläche 1 mittels Dosierorganen in einstellbaren Mengen auf in veränderbarer Weise ansteuerbare Schleuderscheiben 8 gegeben. Die Schleuderscheiben 8 werfen die zu verteilenden Streugutpartikel in bekannter Weise breitwürfig nach hinten und zu beiden Seiten ab, wobei sich ein Streufächer 9 in dreidimensionaler Weise ausbildet. Um das Streubild zu charakterisieren und eine gleichmäßige Verteilung der Streugutpartikel 6 in gewünschter Weise zu erreichen, werden Verteilung und Wurfweite(en) der Streugutpartikel 6 ermittelt.

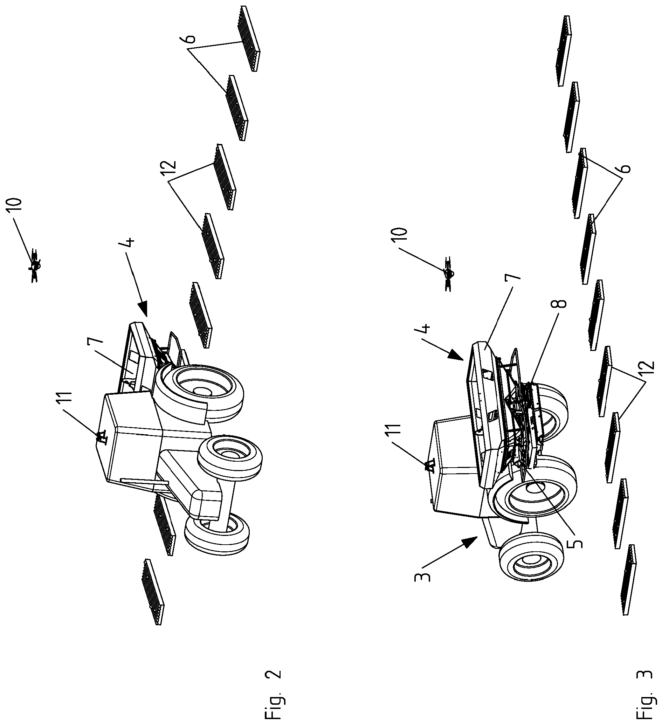

Zur Ermittlung von Verteilung und Wurfweite(en) der abgeworfenen Streugutpartikel 6 wird ein unbemanntes Luftfahrzeug 10 mitsamt geeigneter Sensorik eingesetzt. In den Ausführungsbeispielen der Fig. 1 bis 8 ist das unbemannte Luftfahrzeug 10 als senkrecht start- und landefähiger Quadrocopter ausgebildet. Die Start- und Landevorrichtung 11 des unbemannten Luftfahrzeugs 10 ist an geeigneter Stelle der landwirtschaftlichen Arbeitskombination angebracht. Im gewählten Ausführungsbeispiel ist sie auf dem Kabinendach der Zugmaschine 3 angeordnet, wie in den Fig. 2 und 3 gezeigt. Von dieser Start- und Landevorrichtung 11 startet das unbemannte Luftfahrzeug 10 und ist mit austauschbaren und/oder auffüllbaren Energiespeichereinheiten sowie mit Vorrichtungen zur drahtlosen Kommunikation mit der Basisstation und/oder landwirtschaftlichen Zugmaschine 3 und/oder Arbeitsmaschine 4 ausgestattet. Das unbemannte Luftfahrzeug 10 weist wenigstens eine Erfassungsvorrichtung zur Erfassung wenigstens eines Streuparameters der abgeworfenen Streugutpartikel 6 auf.

Zur Ermittlung der Verteilung der Streugutpartikel 6 über der landwirtschaftlichen Nutzfläche 1 werden an geeigneten Positionen geeignete Haft- und/oder Prüfmatten 12 ausgelegt. Dazu werden die geeigneten Positionen zunächst vom Auswertesystem bestimmt. Anschließend markiert das unbemannte Luftfahrzeug 10 entsprechend den von dem Auswertesystem ermittelten Daten die geeigneten Positionen in für den Maschinenführer erkennbarer Weise, sodass dieser die Prüfmatten 12 manuell auslegen kann. Diese errechneten und markierten Positionen werden in geeigneter Weise im Speicher beispielsweise des Auswertesystems abgelegt. Ebenso ist ein vom Maschinenführer ferngesteuertes Auslegen der Prüfmatten 12 mithilfe des unbemannten Luftfahrzeugs 10 oder ein autonomes Auslegen der Prüfmatten 12 an den dem System bekannten Positionen durch das unbemannte Luftfahrzeug 10, welches zu diesem Zweck mit einer Einrichtung zum Transportieren und Verteilen der Prüfmatten 12 ausgestattet ist, möglich. Eine zum Fernsteuern des unbemannten Luftfahrzeugs 10 geeignete Steuervorrichtung kann transportabel, beispielsweise für einen weiteren Bediener, ausgeführt und/oder kann beispielsweise in der Kabine der Zugmaschine 3 angeordnet sein.

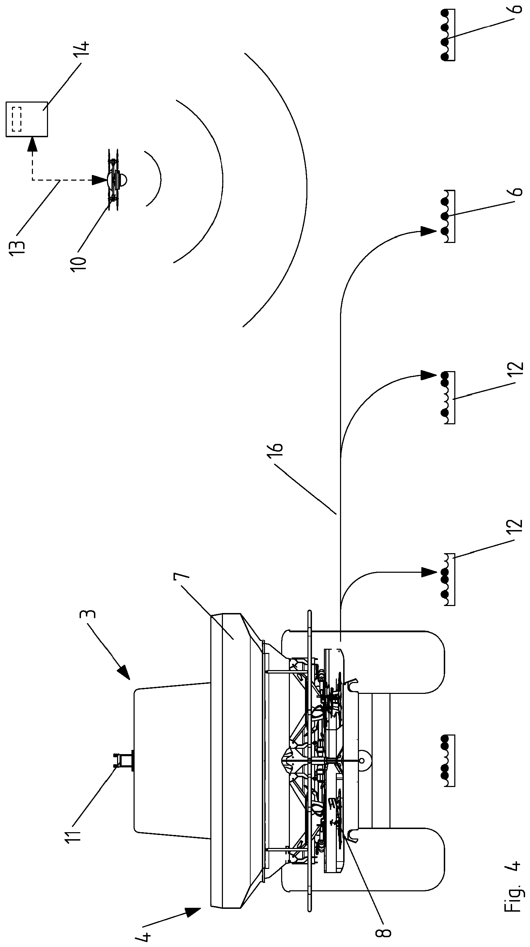

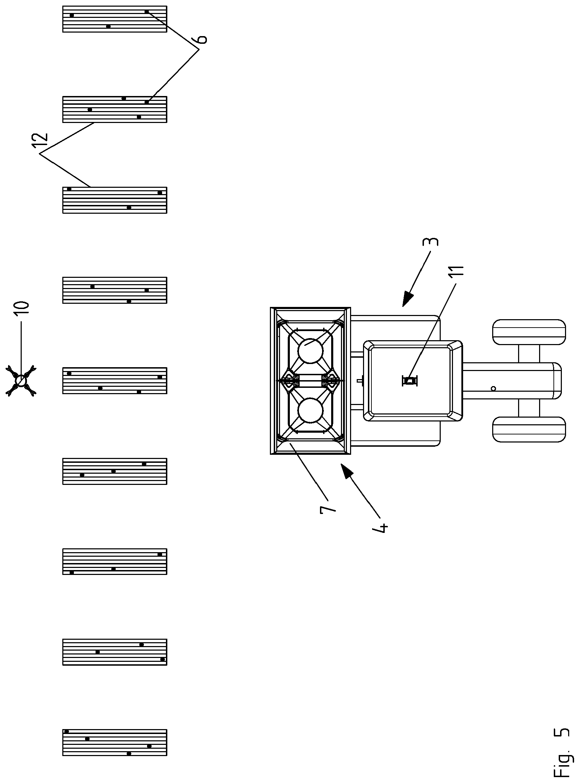

Der Verteilvorgang des zu verteilenden Streugutes 6 wird in dem Abschnitt der landwirtschaftlichen Nutzfläche 1 durchgeführt, in dem die Prüfmatten 12 ausgelegt sind, wobei auch die Prüfmatten 12 in bekannter Weise bestreut werden. Nach dem Verteilvorgang steuert das unbemannte Luftfahrzeug 10 die ihm bekannten Positionen der ausgelegten und bestreuten Prüfmatten 12 an und positioniert sich oberhalb der Prüfmatten 12, wie es in Fig. 4 und 5 gezeigt ist. Dort nimmt es mittels einer Einrichtung zur digitalen Bildaufnahme digitale Fotografien der bestreuten Prüfmatten 12 auf, die den Positionen der Prüfmatten 12 zugeordnet sind. Diese aufgenommenen digitalen Bilder werden in einer mitgeführten Recheneinheit ausgewertet oder zur Auswertung über eine Vorrichtung zur drahtlosen Kommunikation 13 an eine Auswerteeinheit 14 beispielsweise der Zugmaschine 3 oder der Arbeitsmaschine 4 übermittelt, wie in Fig. 4 gezeigt ist.

Die Auswertung der digitalen Bilddaten erfolgt mittels bildanalytischer Methoden und bestimmt die Positionen der aufgefangenen Streugutpartikel 6 auf den Prüfmatten 12. Aus den ermittelten Partikelpositionen auf den Prüfmatten 12 wird die Ist-Verteilung über den gesamten Streufächer 9 errechnet. Die ermittelte Ist-Verteilung wird anschließend mit der eingestellten Soll-Verteilung abgeglichen. Aus den ermittelten Differenzen werden basierend auf in einer Speichereinheit abgelegten Einstellwerten der Arbeitsmaschine 4 Anpassungen der Betriebsparameter der Arbeitsmaschine 4 abgeleitet. Diese aktualisierten Betriebsparameter werden an die Steuereinheiten der Arbeitsmaschine 4 weitergeleitet, woraufhin diese Steuereinheiten regelnd in den Verteilvorgang eingreifen. Dabei werden die Einstellungen beispielsweise der Dosierorgane, der Schleuderscheiben 8 und/oder der Wurfschaufeln in geeigneter Weise verändert, sodass die Ist-Verteilung der eingestellten Soll-Verteilung angepasst wird.

Im Anschluss an die Durchführung des nicht erfindungsgemäßen Verfahrens und/oder nach Beendigung des Arbeitsvorgangs werden die Prüfmatten 12 zur Wiederverwendung wieder eingesammelt. Dies geschieht manuell durch den Maschinenführer oder mithilfe eines unbemannten Luftfahrzeugs 10 ferngesteuert oder autonom. Der Arbeitsaufwand für das Einsammeln der Prüfmatten 12 wird eingespart, wenn die Prüfmatten 12 aus biologisch abbaubarem Material bestehen und somit auf der Nutzfläche 1 verbleiben können.

Auf analoge Weise kann das nicht zur Erfindung gehörende Verfahren zur Kontrolle des Grenzstreuverhaltens eingesetzt werden, wie es in Fig. 1 gezeigt ist. Dazu werden die Prüfmatten 12 auf beschriebene Weise auf der Feldgrenze 15 positioniert. Arbeitet die Arbeitsmaschine 4 in der Nähe der Feldgrenze 15, arbeitet das unbemannte Luftfahrzeug 10 in beschriebener Weise, steuert die Prüfmatten 12 an und nimmt digitales Bildmaterial auf. Werden mithilfe der bildanalytischen Methoden Streugutpartikel 6 auf den auf der Feldgrenze 15 befindlichen Prüfmatten 6 identifiziert, wird/werden die Wurfweite(n) auf der entsprechenden Seite der Arbeitsmaschine 4 in beschriebener Weise geeignet nachgeregelt.

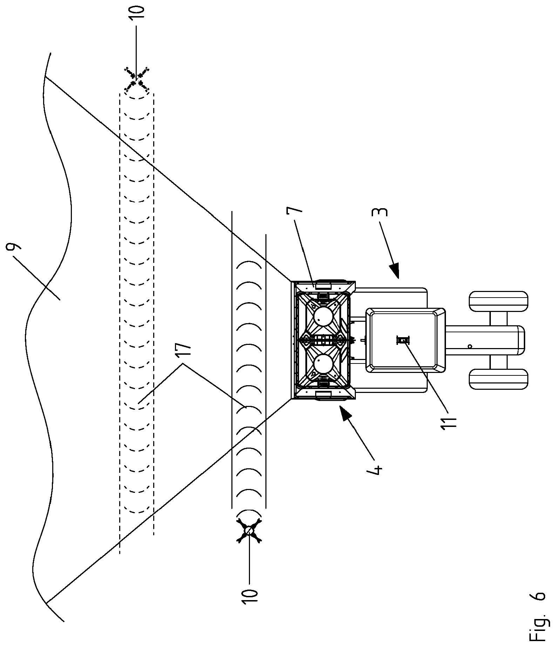

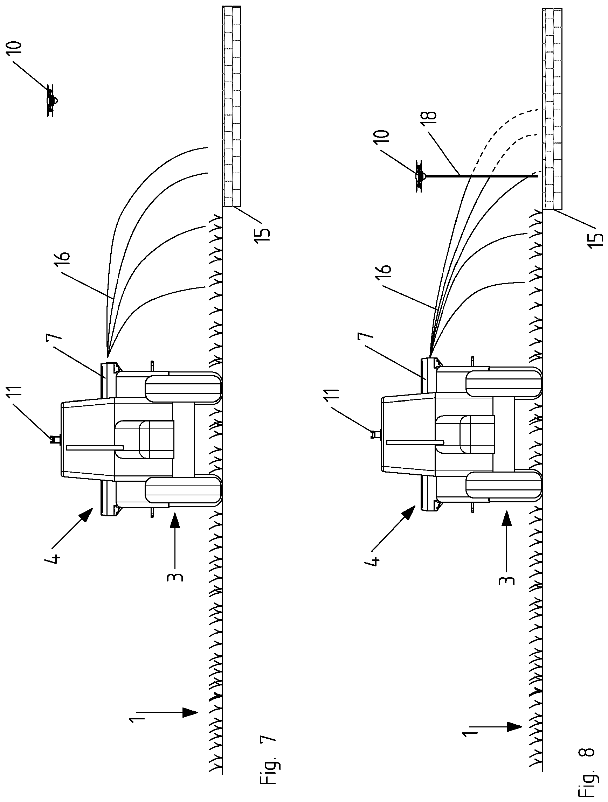

Nach dem erfindungsgemäßen Verfahren wird eine direkte Erfassung der abgeworfenen Streugutpartikel 6 erreicht, wie in den Fig. 6 und 7 gezeigt. Das unbemannte Luftfahrzeug bewegt sich in der Nähe des Streufächers 9 und erfasst beispielsweise mittels mitgeführter Radar- oder Laserscan-Technik den Teilchenstrom 16 der Streugutpartikel 6. Dies geschieht in nicht dargestellter Weise von einer seitlichen Position oder vorzugsweise von einer Position oberhalb des Streufächers 9, wie es Fig. 7 zeigt.

Abhängig von der Ausdehnung des Streufächers 9 und dem Auflösungsvermögen der mitgeführten Erfassungstechnik erfassen die Sensoren des unbemannten Luftfahrzeugs 10 den überwiegenden Teil des Teilchenstroms 16 des Streufächers 9 oder den Teilchenstrom 16 des Streufächers 9 in Abschnitten 17. Dabei werden Ausbreitungsrichtung(en) und -geschwindigkeit(en) der abgeworfenen Streugutpartikel 6 ermittelt. Aus diesen Werten werden die Flugweiten der Streugutpartikel ermittelt und daraus die Ist-Verteilung der Streugutpartikel abgeleitet. Durch den Abgleich mit einer Soll-Verteilung werden Differenzen ermittelt, die in beschriebener Weise zur Anpassung der Betriebsparameter der Arbeitsmaschine 4 herangezogen werden.

Eine kostengünstigere Ausführungsform des erfindungsgemäßen Verfahrens wird dadurch erreicht, dass das unbemannte Luftfahrzeug 10 mit mechanischen Sensoren zur Erfassung von Ausbreitungsrichtung(en) und -geschwindigkeit(en) ausgestattet ist. Dazu eignet sich vorzugsweise eine Prallplatte 18, die mithilfe des unbemannten Luftfahrzeugs 10 in den Teilchenstrom 16 eingebracht wird. Dort wird die Prallplatte 18 von den abgeworfenen Streugutpartikeln 6 getroffen. Ein nachgeordneter Messaufnehmer, beispielsweise ein Piezzoelement, dient der Feststellung beispielsweise des Impulses der auftreffenden Streugutpartikel, aus dem unter Berücksichtigung ihrer durchschnittlichen Masse die Ausbreitungsgeschwindigkeit in einer Ausbreitungsrichtung ermittelt wird. In beschriebener Weise werden so die Flugweiten der Streugutpartikel und anschließend die Ist-Verteilung rekonstruiert. Durch den Abgleich mit einer Soll-Verteilung werden Differenzen ermittelt, die in beschriebener Weise zur Anpassung der Betriebsparameter der Arbeitsmaschine 4 herangezogen werden.

Mit den beschriebenen Verfahrensvarianten mit der direkten Erfassung der Streugutpartikel 6 mittels kontaktfreier oder mechanischer Sensorik des unbemannten Luftfahrzeugs 10 kann das Grenzstreuen kontrolliert werden. Dazu wird mithilfe der mitgeführten Sensorik überprüft, ob Streugutpartikel eine festgelegte Grenze, wie beispielsweise die Feldgrenze 15, von abgeworfenen Streugutpartikeln 6 überschritten wird. Für den Fall, dass ein Überschreiten festgestellt wird, wird/werden die Ist-Verteilung und/oder die Wurfweite(en) in beschriebener Weise geeignet nachgeregelt.

Nachdem die Ist-Verteilung durch eine der beschriebenen Ausführungsformen des erfindungsgemäßen Verfahrens ermittelt ist, kann/können aus dieser Verteilung stets auch die Wurfweite(en) der Streugutpartikel 6 abgeleitet werden. Zudem sind die Abmessungen der Ist-Verteilung des Streufächers 9 und damit die Ausdehnung des Streufächers 9 quer zur Fahrtrichtung bekannt.

Durch den Einsatz geeigneter, insbesondere kontaktfreier, Sensorik zur dreidimensionalen Erfassung des Streufächers 9 darüber hinaus die dreidimensionale Form des Streufächers 9 rekonstruiert werden. Dies kann auch durch den Einsatz mehrerer unbemannter Luftfahrzeuge erfolgen.

Beim erfindungsgemäßen Einsatz mehrerer unbemannter Luftfahrzeuge 10 kann der erforderliche Arbeitsaufwand auf diese mehreren unbemannten Luftfahrzeuge 10 verteilt werden. Dies würde eine signifikante Zeitersparnis bewirken.

Die Verwendung unbemannter Luftfahrzeuge 10 ermöglicht insbesondere bei prüfmattenunabhängiger Sensorik einen Echtzeit-Einsatz des erfindungsgemäßen Verfahrens. Dadurch kann das Verfahren beliebig oft wiederholt werden oder kontinuierlich während des Arbeitsprozesses durchgeführt werden. Dadurch kann eine Abweichung der Ist-Verteilung beispielsweise aufgrund sich ändernder Umgebungsparameter kontinuierlich in Echtzeit durch Abgleich mit der eingestellten Soll-Verteilung korrigiert werden.

## Patentansprüche

1. Verfahren zur Erfassung wenigstens eines Streuparameters der Streupartikel (6) eines streufähigen Gutes im Feld, wobei das streufähige Gut von einer vorzugsweise landwirtschaftlichen Arbeitsmaschine (4) ausgebracht wird, **dadurch gekennzeichnet, dass** die Erfassung des wenigstens einen Streuparameters der Streupartikel (6) des streufähigen Gutes durch wenigstens ein vorzugsweise im Wesentlichen senkrecht start- und landefähiges, vorzugsweise autonom agierendes, unbemanntes Luftfahrzeug (ULF) (10) erfolgt, welches wenigstens eine Einheit zur Erfassung wenigstens eines Streuparameters der Streupartikel (6) eines streufähigen Gutes aufweist, welches eine Einheit zum Senden und/oder Empfangen von Steuersignalen von einer und/oder an eine Basisstation und/oder landwirtschaftliche Arbeitsmaschine (6) und zumindest eine Einheit zur Übermittlung (13) der erfassten Daten an eine Basisstation und/oder an eine landwirtschaftliche Arbeitsmaschine (4) aufweist und welches eine Einheit zur Positionsbestimmung aufweist, wobei Streuparameter der Streupartikel (6) eines streufähigen Gutes die Wurfweite(n) und/oder die Verteilung der ausgebrachten körnigen Streugutpartikel (6) von streufähigem Gut sind, dass das unbemannte Luftfahrzeug (10) den Teilchenstrom (16) des streufähigen Gutes (6) während des Verteilvorgangs mittels Sensoren erfasst, dass die Ausbreitungsrichtung(en) und - geschwindigkeit(en) der Teilchen des streufähigen Gutes (6) durch die Erfassungseinrichtungen des unbemannten Luftfahrzeugs (10) bestimmt und daraus die Wurfweite(n) und -richtung(en) der Teilchen (6) ermittelt werden.

2. Verfahren nach dem vorstehenden Anspruch 1, **dadurch gekennzeichnet, dass** die ermittelten Wurfweiten und/oder -richtungen der Teilchen (6) mit Sollwerten abgeglichen werden, und dass aus den bei diesem Abgleich festgestellten Differenzen Anpassungen der Betriebsparameter der Arbeitsmaschine (4) abgeleitet werden.

3. Verfahren nach dem vorstehenden Anspruch 2, **dadurch gekennzeichnet, dass** die Erfassungseinrichtungen des unbemannten Luftfahrzeugs (10) zumindest den überwiegenden Teil des Streufächers (9) der Arbeitsmaschine (4) von einer Position oberhalb des Streufächers (9) aus erfassen.

4. Verfahren nach dem vorstehenden Anspruch 3, wobei aufgrund einer sehr großen Arbeitsbreite der Arbeitsmaschine (4) das unbemannte Luftfahrzeug (10) nicht den überwiegenden Teil des Streufächers (9) erfassen kann, **dadurch gekennzeichnet, dass** das unbemannte Luftfahrzeug (10) den Streufächer (9) abfliegt und abschnittsweise (17) mittels Erfassungseinrichtungen erfasst.

5. Verfahren nach einem der Ansprüche 3 oder 4, **dadurch gekennzeichnet, dass** das unbemannte Luftfahrzeug (10) im Bereich der Feldgrenze (15), oberhalb dieser, vorzugsweise senkrecht über dieser fliegt und dort erfasst, ob der Teilchenstrom (16) die Feldgrenze (15) überschreitet.

6. System aufweisend ein unbemanntes Luftfahrzeug gemäß Anspruch 1, das zur Durchführung des Verfahrens nach zumindest einem der Ansprüche 1 bis 5 eingerichtet ist, , wobei das unbemannte Luftfahrzeug (10) auf einer landwirtschaftlichen Arbeitsmaschine (4) start- und landefähig ist. das unbemannte Luftfahrzeug (10) eine wieder auffüllbare und/oder austauschbare Energiespeichereinheit aufweist, wobei das unbemannte Luftfahrzeug (10) Sensoren zur kontaktfreien Erfassung des Teilchenstroms 16 aufweist, vorzugsweise Radarscanner, Laserscanner oder eine Kamera zur Aufnahme digitaler Bilder vorzugsweise mitsamt einer Einheit zur Bildauswertung.

7. System nach Anspruch 6 zur Durchführung des Verfahrens nach dem Anspruch 5 , **dadurch gekennzeichnet**, das unbemannte Luftfahrzeug mit geeigneter, insbesondere kontaktfreier, Sensorik zur dreidimensionalen Erfassung des Streufächers 9 ausgestattet ist.

8. System nach Anspruch 6 oder 7 zur Durchführung des Verfahrens nach einem der Ansprüche 4 oder 5 , **dadurch gekennzeichnet, dass** der Sensor ein mechanischer Sensor, beispielsweise Prallplatte (18) oder Membran ist, mit einem Messaufnehmer, beispielsweise Piezzoelement und dieser Sensor vom Teilchenstrom (16) beschossen wird.

9. System nach einem der Ansprüche 6 bis 8 zur Durchführung des Verfahrens nach dem Anspruch 5 , **dadurch gekennzeichnet, dass** zumindest zwei unbemannte Luftfahrzeuge (10) eingesetzt werden, um die Streuverteilung zu erfassen.

## Claims

1. Method for capturing at least one spreading parameter of the spreading particles (6) of a spreadable material in the field, wherein the spreadable material is applied by a preferably agricultural working machine (4), **characterized in that** the at least one spreading parameter of the spreading particles (6) of the spreadable material is captured by at least one unmanned aerial vehicle (UAV) (10), which is preferably capable of taking off and landing substantially vertically, can operate preferably autonomously, and has at least one unit for capturing at least one spreading parameter of the spreading particles (6) of a spreadable material, which has a unit for sending and/or receiving control signals to and/or from a base station and/or agricultural working machine (6) and at least one unit for transmitting (13) the captured data to a base station and/or to an agricultural working machine (4) and which has a unit for position determination, wherein spreading parameters of the spreading particles (6) of a spreadable material are the casting range(s) and/or the distribution of the applied granular spreading material particles (6) of spreadable material, **in that** the unmanned aerial vehicle (10) captures the particle flow (16) of the spreadable material (6) during the distribution process by means of sensors, **in that** the propagation direction(s) and propagation speed(s) of the particles of the spreadable material (6) are determined by the capturing devices of the unmanned aerial vehicle (10) and the casting range(s) and casting direction(s) of the particles (6) are determined therefrom.

2. Method according to the preceding claim 1, **characterized in that** the determined casting ranges and/or casting directions of the particles (6) are compared with target values, **and in that** adjustments of the operating parameters of the working machine (4) are derived from the differences determined during this comparison.

3. Method according to the preceding claim 2, **characterized in that** the capturing devices of the unmanned aerial vehicle (10) capture at least the main portion of the spreading fan (9) of the working machine (4) from a position above the spreading fan (9).

4. Method according to the preceding claim 3, wherein, due to a very large working width of the working machine (4), the unmanned aerial vehicle (10) cannot capture the main portion of the spreading fan (9), **characterized in that** the unmanned aerial vehicle (10) flies over the spreading fan (9) and captures it in portions (17) by means of capturing devices.

5. Method according to any of claims 3 or 4, **characterized in that** the unmanned aerial vehicle (10) flies in the region of the field boundary (15), above it, preferably vertically above it, and captures there whether the particle stream (16) overshoots the field boundary (15).

6. System comprising an unmanned aerial vehicle according to claim 1, which is designed to carry out the method according to at least one of claims 1 to 5, wherein the unmanned aerial vehicle (10) is capable of taking off from and landing on an agricultural work machine (4), the unmanned aerial vehicle (10) has a refillable and/or replaceable energy storage unit, wherein the unmanned aerial vehicle (10) has sensors for contactless capturing of the particle stream 16, preferably radar scanners, laser scanners or a camera for recording digital images, preferably together with a unit for image evaluation.

7. System according to claim 6 for carrying out the method according to claim 5, **characterized in that** the unmanned aerial vehicle is equipped with suitable, in particular contactless, sensors for three-dimensional capturing of the spreading fan 9.

8. System according to claim 6 or 7 for carrying out the method according to any of claims 4 or 5, **characterized in that** the sensor is a mechanical sensor, for example a baffle plate (18) or diaphragm, having a measuring sensor, for example a piezo element, and this sensor is bombarded by the particle stream (16).

9. System according to any of claims 6 to 8 for carrying out the method according to claim 5, **characterized in that** at least two unmanned aerial vehicles (10) are used to capture the spread distribution.

## Revendications

1. Procédé pour la détection d'au moins un paramètre d'épandage des particules d'épandage (6) d'une matière pouvant être épandue dans le champ, dans lequel la matière pouvant être épandue est épandue par une machine de travail (4), de préférence agricole, **caractérisé en ce que** la détection de l'au moins un paramètre d'épandage des particules d'épandage (6) de la matière pouvant être épandue est effectuée par au moins un aéronef sans pilote (ULF) (10), de préférence agissant en autonomie, de préférence pouvant décoller et atterrir sensiblement verticalement, lequel présente au moins une unité pour la détection d'au moins un paramètre d'épandage des particules d'épandage (6) d'une matière pouvant être épandue, lequel ULF présente une unité pour l'émission et/ou la réception de signaux de commande à partir d'une station de base et/ou d'une machine de travail (6) agricole et/ou vers celles-ci et au moins une unité pour la transmission (13) des données détectées à une station de base et/ou à une machine de travail (4) agricole et lequel ULF présente une unité pour la détermination de position, dans lequel les paramètres d'épandage des particules d'épandage (6) d'une matière pouvant être épandue sont la ou les distances de projection et/ou la répartition des particules de matière d'épandage (6) granuleuses épandues de matière pouvant être épandue, **en ce que** l'aéronef sans pilote (10) détecte le flux de particules (16) de la matière pouvant être épandue (6) pendant le processus de distribution au moyen de capteurs, **en ce que** la ou les directions et la ou les vitesses de propagation des particules de la matière pouvant être épandue (6) sont déterminées par les dispositifs de détection de l'aéronef sans pilote (10) et la ou les distances et directions de projection des particules (6) en sont définies.

2. Procédé selon la revendication 1 précédente, **caractérisé en ce que** les distances et/ou directions de projection définies des particules (6) sont comparées à des valeurs de consigne, **et en ce que** des adaptations des paramètres de fonctionnement de la machine de travail (4) sont déduites des différences constatées lors de ladite comparaison.

3. Procédé selon la revendication 2 précédente, **caractérisé en ce que** les dispositifs de détection de l'aéronef sans pilote (10) détectent au moins la majeure partie du compartiment d'épandage (9) de la machine de travail (4) à partir d'une position située au-dessus du compartiment d'épandage (9).

4. Procédé selon la revendication 3 précédente, dans lequel, en raison d'une très grande largeur de travail de la machine de travail (4), l'aéronef sans pilote (10) ne peut pas détecter la majeure partie du compartiment d'épandage (9), **caractérisé en ce que** l'aéronef sans pilote (10) parcourt le compartiment d'épandage (9) et détecte par sections (17) au moyen de dispositifs de détection.

5. Procédé selon l'une des revendications 3 ou 4, **caractérisé en ce que** l'aéronef sans pilote (10) vole dans la zone de la limite de champ (15), au-dessus de celle-ci, de préférence à la verticale au-dessus de celle-ci, et détecte à partir de là si le flux de particules (16) dépasse la limite de champ (15) ou non.

6. Système présentant un aéronef sans pilote selon la revendication 1, lequel est configuré pour la mise en oeuvre du procédé selon au moins l'une des revendications 1 à 5, dans lequel l'aéronef sans pilote (10) peut décoller et atterrir sur une machine de travail (4) agricole, l'aéronef sans pilote (10) présente une unité formant accumulateur d'énergie rechargeable et/ou remplaçable, dans lequel l'aéronef sans pilote (10) présente des capteurs pour la détection sans contact du flux de particules (16), de préférence un scanner radar, un scanner laser ou une caméra pour l'enregistrement d'images numériques, de préférence avec une unité pour l'analyse d'images.

7. Système selon la revendication 6 pour la mise en oeuvre du procédé selon la revendication 5, **caractérisé en ce** l'aéronef sans pilote est équipé d'une technologie des capteurs appropriée, en particulier sans contact, pour la détection tridimensionnelle du compartiment d'épandage (9).

8. Système selon la revendication 6 ou 7 pour la mise en oeuvre du procédé selon l'une des revendications 4 ou 5, **caractérisé en ce que** le capteur est un capteur mécanique, par exemple une plaque de déviation (18) ou une membrane, comportant un capteur de mesure, par exemple un élément piézoélectrique, et ledit capteur est bombardé par le flux de particules (16).

9. Système selon l'une des revendications 6 à 8 pour la mise en oeuvre du procédé selon la revendication 5, **caractérisé en ce qu'**au moins deux aéronefs sans pilote (10) sont utilisés afin de détecter la répartition d'épandage.
